# EUROPEAN PATENT APPLICATION

(11) **EP 4 503 224 A1**
(43) Date of publication of application: **05.02.2025**
(21) Application number: 24170958.3
(22) Date of filing: 18.04.2024
(51) Int. Cl.: H01M 10/0525, H01M 10/0569

(54) **ELECTROLYTE FOR RECHARGEABLE LITHIUM BATTERY AND RECHARGEABLE LITHIUM BATTERY INCLUDING THE SAME**

(30) Priority: 01.08.2023 KR 20230100658
(71) Applicant: Samsung SDI Co., Ltd., Yongin-si, Gyeonggi-do 17084 (KR); Korea Advanced Institute of Science and Technology, Daejeon Gyeonggi-do 34141 (KR)
(72) Inventor: Bae, Tae Hyon, 17084 Yongin-si, Gyeonggi-do (KR); Lee, Harim, 17084 Yongin-si, Gyeonggi-do (KR); Kim, Sanghyung, 17084 Yongin-si, Gyeonggi-do (KR); Goh, Aehui, 17084 Yongin-si, Gyeonggi-do (KR); Son, Seunghyeon, 17084 Yongin-si, Gyeonggi-do (KR); Yu, Arum, 17084 Yongin-si, Gyeonggi-do (KR); Kim, Sanghoon, 17084 Yongin-si, Gyeonggi-do (KR); Choi, Nam-Soon, 34141 Yuseong-gu, Daejeon (KR); Kim, Saehun, 34141 Yuseong-gu, Daejeon (KR); Lee, Jeong-A, 34141 Yuseong-gu, Daejeon (KR)
(74) Representative: Gulde & Partner

(57) **Abstract**

An electrolyte for a rechargeable lithium battery and a rechargeable lithium battery including the electrolyte are provided. The electrolyte includes a non-aqueous organic solvent and a lithium salt, and the non-aqueous organic solvent includes 10 to 30 vol% of a non-aqueous organic solvent represented by Chemical Formula 1, based on a total amount of the non-aqueous organic solvent: 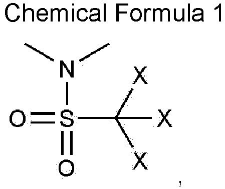 and
wherein, in Chemical Formula 1, each X is the same or different and independently a hydrogen atom or a fluorine atom.

## Description

### BACKGROUND

### 1. Field

One or more embodiments of the present disclosure relate to an electrolyte for a rechargeable lithium battery and a rechargeable lithium battery including the same.

### 2. Description of the Related Art

Rechargeable lithium batteries are attracting attention as a driving power source for information technology (IT) devices because they are relatively lightweight and have relatively high energy density.

Furthermore, as information technology (IT) devices become increasingly more high-performance, rechargeable lithium batteries have also become more high-capacity. In order to implement rechargeable lithium batteries with high capacity, it is necessary to increase the charging voltage, but an electrolyte suitable for these applications has not been properly proposed.

The electrolyte implemented in rechargeable lithium batteries widely and most often to date, is one utilizing a carbonate-based non-aqueous organic solvent, which is a solvent with a high tendency to electrochemically oxidize and decompose under high charging voltage conditions. For example, electrolytes utilizing carbonate-based non-aqueous organic solvents may cause side reactions on the surface of the positive electrode to form a resistance layer. Electrolytes utilizing these solvents may also cause complications such as gas generation and electrolyte depletion, continuously impairing the cycle-life characteristics of rechargeable lithium batteries.

### SUMMARY

Aspects of example embodiments are directed toward an electrolyte for a rechargeable lithium battery in which oxidative decomposition of a non-aqueous organic solvent is suppressed or reduced, e.g., even if the charging voltage is increased. Additional aspects will be set forth in part in the description which follows and, in part, will be apparent from the description, or may be learned by practice of the presented embodiments of the disclosure.

The invention is defined by the appended claims. The description that follows is subjected to this limitation. Any disclosure lying outside the scope of said claims is only intended for illustrative as well as comparative purposes.

The present invention provides an electrolyte for a rechargeable lithium battery including a non-aqueous organic solvent and a lithium salt. The non-aqueous organic solvent includes 10 volume percentage (vol%) to 30 vol% of a non-aqueous organic solvent represented by Chemical Formula 1, based on a total amount of the non-aqueous organic solvent:

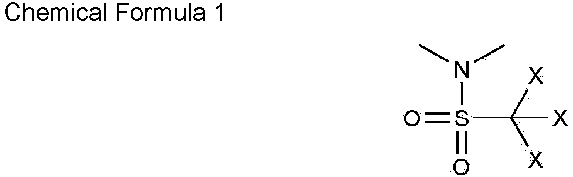

In Chemical Formula 1, each X is the same or different and is independently be a hydrogen atom or a fluorine atom.

The non-aqueous organic solvent may include 10 vol% to 20 vol% of the non-aqueous organic solvent represented by Chemical Formula 1, based on a total amount of the non-aqueous organic solvent.

In Chemical Formula 1, all X may be fluorine atoms (e.g., each X is a fluorine atom).

The non-aqueous organic solvent may further include a carbonate-based non-aqueous organic solvent, an ester-based non-aqueous organic solvent, or a combination thereof.

The carbonate-based non-aqueous organic solvent may include a cyclic carbonate-based non-aqueous organic solvent including ethylene carbonate (EC), propylene carbonate (PC), butylene carbonate (BC), or a combination thereof; and a chain carbonate-based non-aqueous organic solvent including dimethyl carbonate (DMC), diethyl carbonate (DEC), dipropyl carbonate (DPC), methylpropyl carbonate (MPC), ethylpropyl carbonate (EPC), methylethyl carbonate (MEC), or a combination thereof.

The ester-based non-aqueous organic solvent may include methyl acetate, ethyl acetate, n-propyl acetate, dimethylacetate, methylpropionate, ethylpropionate, propylpropionate (PP), decanolide, mevalonolactone, valerolactone, caprolactone, or a combination thereof.

The non-aqueous organic solvent may include a carbonate-based non-aqueous organic solvent and an ester-based non-aqueous organic solvent in a volume ratio of 1:2 to 1:3.

The carbonate-based non-aqueous organic solvent may include ethylene carbonate (EC) and propylene carbonate (PC).

The ester-based non-aqueous organic solvent may include propyl propionate (PP).

The lithium salt may include at least one (e.g., one, two, or more) selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide (LiFSI), LiC₄F₉SO₃, LiN(CₓF₂ₓ₊₁SO₂)(C_{y}F_{2y+1}SO₂) (x and y are integers from 1 to 20), lithium trifluoromethane sulfonate, lithium tetrafluoroethanesulfonate, lithium difluorobis(oxalato)phosphate (LiDFOB), and lithium bis(oxalato)borate (LiBOB).

The electrolyte may further include a carbonate-based additive, a sultone-based additive, a nitrile-based additive, a lithium salt-based additive, or a combination thereof.

In some example embodiments, a rechargeable lithium battery includes a positive electrode including a positive electrode active material; a negative electrode including a negative electrode active material; and the electrolyte.

The rechargeable lithium battery may have a charging voltage of greater than or equal to about 4.45 V.

The positive electrode active material may include lithium cobalt oxide.

The negative electrode active material may include graphite.

The electrolyte for a rechargeable lithium battery according to some example embodiments suppresses oxidative decomposition of the non-aqueous organic solvent even if the charging voltage is increased, thereby implementing a rechargeable lithium battery with high capacity.

### BRIEF DESCRIPTION OF THE DRAWINGS

FIG. 1 is a schematic view showing a rechargeable lithium battery according to one or more embodiments of the present disclosure.
FIG. 2 is results of charge and discharge experiments for a rechargeable lithium battery according to one or more embodiments of the present disclosure.

### DETAILED DESCRIPTION

Hereinafter, a rechargeable lithium battery according to some embodiments will be described in more detail with reference to the accompanying drawings, wherein like reference numerals refer to like elements throughout, and duplicative descriptions thereof may not be provided. In this regard, the present embodiments may be modified to have different forms and should not be construed as being limited to the descriptions set forth herein. Accordingly, the embodiments are merely described by referring to the drawings, to explain aspects of the present description. However, these embodiments are only examples, and the present disclosure is not limited thereto, but rather the present disclosure is defined by the scope of claims.

As utilized herein, the term "and/or" includes any and all combinations of one or more of the associated listed items. Expressions such as "at least one of," if preceding a list of elements, modify the entire list of elements and do not modify the individual elements of the list.

If it is described that an element is "on," "connected to," or "coupled to" another element, it will be understood that the element may be provided directly on another element or still another element may be interposed therebetween. On the other hand, if it is described that an element is "directly on" another element, still another element is not interposed therebetween.

It will be understood that, although the terms "first," "second," and "third" may be utilized herein to describe one or more suitable elements, components, regions, layers, and/or sections, these elements, components, regions, layers, and/or sections should not be limited by these terms. These terms are only utilized to distinguish one element, component, region, layer, or section from another region, layer, or section. Thus, a first element, component, region, layer, or section described herein may be termed a second element, component, region, layer, or section without departing from the teachings of the present specification.

As utilized herein, the singular forms "a," "an," and "the" are intended to include the plural forms, including "at least one," unless the content clearly indicates otherwise. As used herein, expressions such as "at least one,", "one of," and "selected from," if preceding a list of elements, should not be construed as being limited to the singular, but may modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

As utilized herein, the term "and/or" includes any and all combinations of one or more of the associated listed items. The terms "include," "includes," "including," "comprise," "comprises," "comprising," "having," "has," and/or "have" if utilized in the detailed description, specify a presence of stated features, regions, integers, steps, operations, elements, and/or components, but do not preclude the presence or addition of one or more other features, regions, integers, steps, operations, elements, components, and/or groups thereof.

As used herein, the terms "use," "using," and "used" may be considered synonymous with the terms "utilize," "utilizing," and "utilized," respectively.

Unless otherwise defined, all terms (including chemical, technical and scientific terms) utilized herein have the same meaning as commonly understood by one of ordinary skill in the art to which the present disclosure belongs. In some embodiments, it will be further understood that terms, such as those defined in commonly utilized dictionaries, should be interpreted as having a meaning that is consistent with their meaning in the context of the relevant art and the present disclosure, and will not be interpreted in an idealized or overly formal sense unless expressly so defined herein.

In this context, "consisting essentially of" means that any additional components will not materially affect the chemical, physical, optical or electrical properties of the semiconductor film.

### Definitions

As utilized herein, the term "particle diameter" of particles refers to an average diameter if particles are spherical and refers to an average major axis length if particles are non-spherical. A particle diameter of particles may be measured utilizing a particle size analyzer (PSA). A "particle diameter" of particles is, for example, an "average particle diameter." An average particle diameter refers to, for example, a median particle diameter (D50). The median particle diameter (D50) is a particle size corresponding to a 50 % cumulative volume if a particle size distribution measured through a laser diffraction method is calculated from particles having a smaller particle size. In some embodiments, a "particle diameter" or an "average particle diameter" may be measured from a transmission electron microscope (TEM) image, a scanning electron microscope (SEM) image, and/or the like.

D50 refers to a particle size corresponding to a 50 % cumulative volume if a particle size distribution measured through a laser diffraction method is calculated from particles having a smaller particle size.

D90 refers to a particle size corresponding to a 90 % cumulative volume if a particle size distribution measured through a laser diffraction method is calculated from particles having a smaller particle size.

D10 refers to a particle size corresponding to a 10 % cumulative volume if a particle size distribution measured through a laser diffraction method is calculated from particles having a smaller particle size.

In some embodiments, the term "group" may refer to a group (i.e., column) of elements in the periodic table of the elements according to the International Union of Pure and Applied Chemistry ("IUPAC") Groups 1-18 group classification system. In some embodiments, the term "group" may refer to a chemical functional group, e.g., an "alkyl group."

The term "electrode active material" as utilized herein refers to an electrode material that may undergo lithiation and delithiation.

The term "negative electrode active material" as utilized herein refers to a negative electrode material that may undergo lithiation and delithiation.

The terms "lithiate" and "lithiating" as utilized herein refer to a process of adding lithium to an electrode active material.

The terms "delithiate" and "delithiating" as utilized herein refer to a process of removing lithium from an electrode active material.

The terms "charge" and "charging" as utilized herein refer to a process of providing electrochemical energy to a battery.

The terms "discharge" and "discharging" as utilized herein refer to a process of removing electrochemical energy from a battery.

The term "positive electrode" as utilized herein refers to an electrode at which electrochemical reduction and lithiation occur during a discharging process.

The term "negative electrode" as utilized herein refers to an electrode at which electrochemical oxidation and delithiation occur during a discharging process.

### Electrolyte

As previously described, the electrolyte implemented widely, and most often to date, is an electrolyte utilizing a carbonate-based non-aqueous organic solvent. However, the carbonate-based non-aqueous organic solvent has a high tendency to electrochemically oxidize and decompose under high charging voltage conditions, causing one or more undesirable side reactions.

### Auxiliary Solvent

According to the present invention, there is provided an electrolyte for a rechargeable lithium battery including a non-aqueous organic solvent and a lithium salt, wherein the non-aqueous organic solvent includes a non-aqueous organic solvent represented by Chemical Formula 1, based on a total amount of the non-aqueous organic solvent:

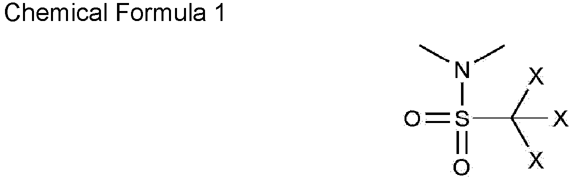

In Chemical Formula 1, each X may be the same or different and may independently be a hydrogen atom or a fluorine atom. For example, the non-aqueous organic solvent represented by Chemical Formula 1 may be N, N-Dimethyltrifluoromethanesulfonamide (DMTMSA). The non-aqueous organic solvent includes 10 vol% to 30 vol%, preferably 10 vol% to 20 vol%, of the non-aqueous organic solvent represented by Chemical Formula 1, based on a total amount of the non-aqueous organic solvent.

The non-aqueous organic solvent functions (e.g., serves) as a medium for transmitting ions taking part in the electrochemical reaction of a battery.

Compared to the carbonate-based non-aqueous organic solvent, the non-aqueous organic solvent represented by Chemical Formula 1 avoids oxidative decomposition (e.g., suppresses oxidative decomposition of the non-aqueous organic solvent) under high voltage charging conditions (e.g., even if the charging voltage is increased). Thus, a rechargeable lithium battery with high capacity may be implemented by utilizing the non-aqueous organic solvent represented by Chemical Formula 1.

Furthermore, the non-aqueous organic solvent represented by Chemical Formula 1 has higher electrochemical stability than the non-aqueous organic solvent represented by Chemical Formula 2. In Chemical Formula 2, each X may be the same or different and may independently be a hydrogen atom or a fluorine atom (e.g., N,N-diethyltrifluoromethanesulfonamide, DETMSA). Due to the higher electrochemical stability of the non-aqueous organic solvent represented by Chemical Formula 1, side reactions are reduced even if the charge and discharge cycles of the rechargeable lithium battery are repeated. This may be confirmed from analysis of a battery capacity retention rate, or an amount of decomposition products of lithium salt, and/or the like, after a long charge and discharge cycle of a rechargeable lithium battery.

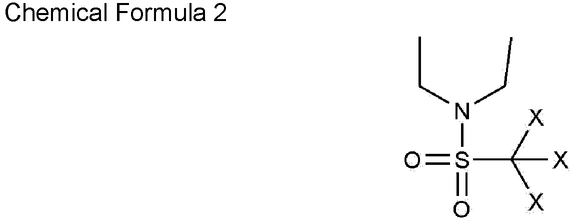

The non-aqueous organic solvent includes the non-aqueous organic solvent represented by Chemical Formula 1 as an "auxiliary solvent" relative to the total amount of the non-aqueous organic solvent. Herein, the "auxiliary solvent" refers to a solvent that is included in less than 50 vol% relative to the total amount of the non-aqueous organic solvent and functions to assist the (e.g., remaining) "main solvent."

Ifthe non-aqueous organic solvent represented by Chemical Formula 1 is utilized in excessive amounts as the "main solvent," it may undergo reduction-decomposition with the negative electrode and thus reduce capacity, but if utilized in small amounts as the "auxiliary solvent," it may improve solvent oxidation resistance and improve high-voltage performance.

### Main Solvent

The non-aqueous organic solvent further includes a "main solvent." In some embodiments, the main solvent may be or include a carbonate-based non-aqueous organic solvent, an ester-based non-aqueous organic solvent, or a combination thereof.

The carbonate-based non-aqueous organic solvent may be a cyclic carbonate-based non-aqueous organic solvent or a chain carbonate-based non-aqueous organic solvent. For example, the carbonate-based non-aqueous organic solvent may be a cyclic carbonate-based non-aqueous organic solvent including ethylene carbonate (EC), propylene carbonate (PC), butylene carbonate (BC), or a combination thereof; and a chain carbonate-based non-aqueous organic solvent including at least one selected from among dimethyl carbonate (DMC), diethyl carbonate (DEC), dipropyl carbonate (DPC), methylpropyl carbonate (MPC), ethylpropyl carbonate (EPC), methylethyl carbonate (MEC), and/or combinations thereof. Additionally, if utilizing a carbonate-based solvent, the cyclic carbonate and chain carbonate may be mixed and utilized. For example, cyclic carbonate and chain carbonate may be mixed at a volume ratio of about 1:1 to about 1:9.

The ester-based non-aqueous organic solvent may include methyl acetate, ethyl acetate, n-propyl acetate, dimethylacetate, methylpropionate, ethylpropionate, propylpropionate (PP), decanolide, mevalonolactone, valerolactone, caprolactone, or a combination thereof.

The non-aqueous organic solvent as the "main solvent" may include a carbonate-based non-aqueous organic solvent and an ester-based non-aqueous organic solvent in a volume ratio of about 1:2 to about 1:3. Herein, the carbonate-based non-aqueous organic solvent may include ethylene carbonate (EC) and propylene carbonate (PC); and the ester-based non-aqueous organic solvent may include propylpropionate (PP).

### Lithium Salt

The lithium salt dissolved in the organic solvent supplies lithium ions in a battery, enables a general (i.e., basic or suitable) operation of a rechargeable lithium battery, and improves transportation of the lithium ions between positive and negative electrodes. Representative examples of the lithium salt may include at least one (e.g., or more) selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide (LiFSI), LiC₄F₉SO₃, LiN(CₓF₂ₓ₊₁SO₂)(C_{y}F_{2y+1}SO₂) (wherein x and y are integers from 1 to 20), lithium trifluoromethane sulfonate, lithium tetrafluoroethanesulfonate, lithium difluorobis(oxalato)phosphate (LiDFOB) and lithium bis(oxalato)borate (LiBOB).

The lithium salt may be utilized in a concentration in a range of about 0.1 M to about 2.0 M. If the concentration of lithium salt is within the disclosed range, the electrolyte has appropriate or suitable ion conductivity and viscosity, and thus excellent or suitable performance may be achieved and lithium ions may move effectively.

### Additive

The electrolyte may further include a carbonate-based additive, a sultone-based additive, a nitrile-based additive, a lithium salt-based additive, or a combination thereof to improve battery cycle-life.

The carbonate-based additive may include vinylethylene carbonate (VEC), vinylene carbonate, or an ethylene carbonate-based compound.

Representative examples of the ethylene carbonate-based compound may include fluoroethylene carbonate (FEC), difluoroethylene carbonate, chloroethylene carbonate, dichloroethylene carbonate, bromoethylene carbonate, dibromoethylene carbonate, nitroethylene carbonate, and/or cyanoethylene carbonate.

The nitrile-based additive may include a dinitrile-based compound, a polynitrile-based compound, or a combination thereof.

Representative examples of the dinitrile-based compound may include succinonitrile (SN), glutaronitrile, adiponitrile (AN), pimelonitrile, octandinitrile, nonandinitrile, caprylnitrile, ethylene glycol (bispropionitrile) ether (nitrile ether), fumaronitrile, and/or the like.

Representative examples of the polynitrile-based compound may include 1, 3, 6-hexanetrinitrile (HTCN), 1, 2, 6-hexanetrinitrile, 1, 3, 5-pentanetrinitrile, nonantrinitrile, 1, 3, 5-benzotrinitrile, 2, 4, 6-trifluorobenzene-1, 3,5-trinitrile, 1, 3, 5-cyclohexanetrinitrile, 1, 2, 3-propionitrile, 1, 3, 5-benztricyano, 1, 2, 3-tris (2-cyanoxy) propane, and/or the like.

The sulfone-based additive may include propene sultone (PST), propane sultone (PS), and/or the like; and the lithium salt-based additive may include lithium tetrafluoroborate (LiBF₄), lithium difluorophosphate (LiPO₂F₂), lithium difluoro(fluoromalonato)borate (LFMB), and/or the like.

### Rechargeable Lithium Battery

Some example embodiments provide a rechargeable lithium battery including a positive electrode including a positive electrode active material; a negative electrode containing a negative electrode active material; and the aforementioned electrolyte.

In the rechargeable lithium battery including the disclosed electrolyte, oxidative decomposition of the non-aqueous organic solvent may be suppressed or reduced even if the charging voltage is increased, and the capacity may be increased.

For example, the rechargeable lithium battery may have a charging voltage of greater than or equal to about 4.45 V, or greater than or equal to about 4.5 V.

### Positive Electrode Active Material

The positive electrode active material may be a compound capable of reversibly intercalating and deintercalating lithium (a lithiated intercalation compound). For example, one or more types (kinds) of composite oxides of lithium and a metal selected from cobalt, manganese, nickel, and combinations thereof may be utilized.

The composite oxide may be a lithium transition metal composite oxide, and specific examples may include lithium nickel-based oxide, lithium cobalt-based oxide, lithium manganese-based oxide, lithium iron phosphate-based compound, cobalt-free nickel-manganese-based oxide, or a combination thereof.

As an example, the positive electrode active material may be a high nickel-based positive electrode active material having a nickel content of about 80 mol% or more based on 100 mol% of metals excluding lithium in the lithium transition metal composite oxide. The nickel content in the high nickel-based positive electrode active material may be about 85 mol% or more, about 90 mol% or more, about 91 mol% or more, or about 94 mol% or more and about 99 mol% or less based on 100 mol% of metals excluding lithium. High-nickel-based positive electrode active materials can achieve high capacity and can be applied to a high-capacity, high-density rechargeable lithium battery.

As an example, at least one compound represented by any of the following chemical formulas selected from among LiₐA_{1-b}X_{b}O_{2-c}D_{c} (0.90 ≤ a ≤ 1.8, 0 ≤ b ≤ 0.5, 0 ≤ c ≤ 0.05); LiₐMn_{2-b}X_{b}O_{4-c}D_{c} (0.90 ≤ a ≤ 1.8, 0 ≤ b ≤ 0.5, 0 ≤ c ≤ 0.05); LiₐNi_{1-b-c}Co_{b}X_{c}O_{2-α}D_{α} (0.90 ≤ a ≤ 1.8, 0 ≤ b ≤ 0.5, 0 ≤ c ≤0.5, 0 < α < 2);LiₐNi_{1-b-c}Mn_{b}X_{c}O_{2-α}D_{α} (0.90 ≤ a ≤ 1.8, 0 ≤ b ≤ 0.5, 0 ≤ c ≤ 0.5, 0 < α < 2);LiₐNi_{b}Co_{c}L¹_{d}GₑO₂(0.90 ≤ a ≤ 1.8, 0 ≤ b ≤ 0.9, 0 ≤ c ≤ 0.5, 0 ≤ d ≤ 0.5, 0 ≤ e ≤ 0.1); LiₐNiG_{b}O₂ (0.90 ≤ a ≤ 1.8, 0.001 ≤ b ≤ 0.1); LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤1.8, 0.001 ≤ b ≤ 0.1); LiₐMn_{1-g}G_{g}PO₄ (0.90 ≤ a ≤ 1.8, 0 ≤ g ≤ 0.5); Li_{(3-f)}Fe₂(PO₄)₃ (0 ≤ f ≤ 2); and LiₐFePO₄ (0.90 ≤ a ≤ 1.8) may be utilized as the positive electrode active material.

In the above chemical formulas, A may be Ni, Co, Mn, or a combination thereof; X may be Al, Ni, Co, Mn, Cr, Fe, Mg, Sr, V, a rare earth element, or a combination thereof; D may be O, F, S, P, or a combination thereof; G may be Al, Cr, Mn, Fe, Mg, La, Ce, Sr, V, or a combination thereof; Q may be Ti, Mo, Mn, or a combination thereof; Z may be Cr, V, Fe, Sc, Y, or a combination thereof; and L¹ may be Mn, Al, or a combination thereof.

### Positive Electrode

The positive electrode for a rechargeable lithium battery may include a current collector and a positive electrode active material layer formed on the current collector. The positive electrode active material layer includes a positive electrode active material and may further include a binder and/or a conductive material.

A content of the positive electrode active material may be about 90 wt% to about 99.5 wt% based on 100 wt% of the positive electrode active material layer.

In some example embodiments, the positive electrode active material layer may further include a binder and a conductive material. At this time, each content of the binder and the conductive material may be about 0.5 wt% to about 5 wt% based on 100% by weight of the positive electrode active material layer.

The binder serves to ensure that the positive electrode active material particles adhere to each other and also to adhere the positive electrode active material to the current collector. Representative examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, polyester resin, and/or nylon, but are not limited thereto.

The conductive material is utilized to impart conductivity to the electrode, and in the battery being configured, any electronically conductive material can be utilized as long as it does not cause chemical change. Examples of the conductive material may include a carbon-based material such as natural graphite, artificial graphite, carbon black, acetylene black, Ketjen black, a carbon fiber, a carbon nanofiber, and/or a carbon nanotube; a metal-based material including copper, nickel, aluminum, silver, and/or the like and in the form of a metal powder or a metal fiber; a conductive polymer such as a polyphenylene derivative; or a mixture thereof.

Al may be utilized as the current collector, but is not limited thereto.

### Negative Electrode Active Material

The negative electrode active material may be a material that reversibly intercalates/deintercalates lithium ions, a lithium metal, a lithium metal alloy, a material capable of doping and dedoping lithium, or a transition metal oxide.

The material that reversibly intercalates/deintercalates lithium ions may be a carbon-based negative electrode active material, for example crystalline carbon, amorphous carbon or a combination thereof. Examples of the crystalline carbon may include graphite such as irregular, plate-shaped, flake, spherical or fibrous natural graphite or artificial graphite, and examples of the amorphous carbon may include soft carbon or hard carbon, a mesophase pitch carbonized product, calcined coke, and/or the like.

The lithium metal alloy may include an alloy including lithium and a metal selected from among Na, K, Rb, Cs, Fr, Be, Mg, Ca, Sr, Si, Sb, Pb, In, Zn, Ba, Ra, Ge, Al, and Sn.

A Si-based negative electrode active material or a Sn-based negative electrode active material may be utilized as a material capable of doping and dedoping lithium. The Si-based negative electrode active material may include silicon, a silicon-carbon composite, SiOx (0 < x ≤ 2), a Si-Q alloy (wherein Q is an element selected from an alkali metal, an alkaline earth metal, a Group 13 element, Group 14 element (excluding Si), Group 15 element, Group 16 element, a transition metal, a rare earth element, and a combination thereof, for example Mg, Ca, Sr, Ba, Ra, Sc, Y, Ti, Zr, Hf, Rf, V, Nb. , Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al , Ga, Sn, In, Tl, Ge, P, As, Sb, Bi, S, Se, Te, Po, and a combination thereof), or a combination thereof. The Sn-based negative electrode active material may be Sn, SnO₂, a Sn alloy, or a combination thereof.

The silicon-carbon composite may be a composite of silicon and amorphous carbon. An average particle diameter (D₅₀) of the silicon-carbon composite particles may be, for example, about 0.5 micrometer (µm) to about 20 µm. According to some example embodiments, the silicon-carbon composite may be in the form of silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be provided between the silicon primary particles, and for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon or hard carbon, a mesophase pitch carbonized product, and calcined coke.

If the silicon-carbon composite includes silicon and amorphous carbon, a content of silicon may be about 10 wt% to about 50 wt%, and a content of amorphous carbon may be about 50 wt% to about 90 wt% based on 100 wt% of the silicon-carbon composite. In some embodiments, if the composite includes silicon, amorphous carbon, and crystalline carbon, a content of silicon may be about 10 wt% to about 50 wt%, and a content of crystalline carbon may be about 10 wt% to about 70 wt%, and a content of amorphous carbon may be about 20 wt% to about 40 wt% based on 100 wt% of the silicon-carbon composite.

Additionally, a thickness of the amorphous carbon coating layer may be about 5 nanometer (nm) to about 100 nm. An average particle diameter (D₅₀) of the silicon particles (i.e., silicon primary particles) may be about 10 nm to about 1 µm, or about 10 nm to about 200 nm. The silicon particles (i.e., silicon primary particles) may exist as silicon alone, in the form of a silicon alloy, or in an oxidized form. In some embodiments, the oxidized form of silicon may be represented by SiOₓ (0<x<2).. In some embodiments, an atomic content ratio of Si:O, which indicates a degree of oxidation in the oxidized form of silicon, may be about 99:1 to about 33:67. In the present specification, as utilized herein, if a definition is not otherwise provided, an average particle diameter (D₅₀) indicates a particle where an accumulated volume is about 50 vol% in a particle size distribution.

The Si-based negative electrode active material or Sn-based negative electrode active material may be utilized by mixing with a carbon-based negative electrode active material. If utilizing a mixture of Si-based negative electrode active material or Sn-based negative electrode active material and carbon-based negative electrode active material, a mixing ratio may be about 1:99 to about 90:10 by weight.

### Negative Electrode

A negative electrode for a rechargeable lithium battery includes a current collector and a negative electrode active material layer on the current collector. The negative electrode active material layer includes a negative electrode active material and may further include a binder and/or a conductive material.

A content of the negative electrode active material may be about 95 wt% to about 99.5 wt% based on 100 wt% of the negative electrode active material layer. A content of the binder may be about 0.5 wt% to about 5 wt% based on 100 wt% of the negative electrode active material layer. A content of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

The binder serves to adhere the negative electrode active material particles to each other and also helps the negative electrode active material to adhere to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamide-imide, polyimide, or a combination thereof.

The aqueous binder may be selected from among a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and combinations thereof.

If an aqueous binder is utilized as the negative electrode binder, it may further include a cellulose-based compound capable of imparting viscosity. As this cellulose-based compound, one or more types (kinds) of carboxymethyl cellulose, hydroxypropylmethyl cellulose, methyl cellulose, or an alkali metal salt thereof may be utilized. The alkali metal may be Na, K, and/or Li.

The dry binder may be a polymer material capable of being fiberized, and may be, for example, polytetrafluoroethylene, polyvinylidene fluoride, a polyvinylidene fluoride-hexafluoropropylene copolymer, polyethylene oxide, or a combination thereof.

The conductive material is utilized to impart conductivity to the electrode, and in the battery being configured, any electronically conductive material can be utilized as long as it does not cause chemical change. Specific examples may include carbon-based materials such as natural graphite, artificial graphite, carbon black, acetylene black, Ketjen black, a carbon fiber, a carbon nanofiber, and/or a carbon nanotube; a metal-based material including copper, nickel, aluminum, silver, and/or the like in the form of a metal powder or a metal fiber; a conductive polymer such as a polyphenylene derivative; or a mixture thereof.

The negative electrode current collector may be selected from among a copper foil, a nickel foil, a stainless steel foil, a titanium foil, a nickel foam, a copper foam, a polymer substrate coated with a conductive metal, and combinations thereof.

### Separator

The rechargeable lithium battery may further include a separator between the negative electrode and the positive electrode, depending on a type or kind of the rechargeable lithium battery. Examples of the separator may be or include polyethylene, polypropylene, polyvinylidene fluoride, and multi-layers thereof such as a polyethylene/polypropylene double-layered separator, a polyethylene/polypropylene/polyethylene triple-layered separator, and/or a polypropylene/polyethylene/polypropylene triple-layered separator.

The separator may include a porous substrate and a coating layer containing an organic material, an inorganic material, or a combination thereof on one or both (e.g., simultaneously) surfaces of the porous substrate.

The porous substrate may be a polymer film formed of any one selected from among polyolefin such as polyethylene and polypropylene, polyester such as polyethylene terephthalate and polybutylene terephthalate, polyacetal, polyamide, polyimide, polycarbonate, polyether ketone, polyaryl ether ketone, polyetherimide, polyamideimide, polybenzimidazole, polyethersulfone, polyphenylene oxide, a cyclic olefin copolymer, polyphenylene sulfide, polyethylene naphthalate, a glass fiber, Teflon, and polytetrafluoroethylene, or a copolymer or a mixture of two or more of them.

The porous substrate may have a thickness of about 1 µm to about 40 µm, for example about 1 µm to about 30 µm, about 1 µm to about 20 µm, about 5 µm to about 15 µm, or about 10 µm to about 15 µm.

The organic material may include a (meth)acryl-based copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer or may exist in a stacked form of a coating layer including an organic material and a coating layer including an inorganic material.

A thickness of the coating layer may be each about 0.5 µm to about 20 µm, for example, about 1 µm to about 10 µm, or about 1 µm to about 5 µm.

### Rechargeable Lithium Battery

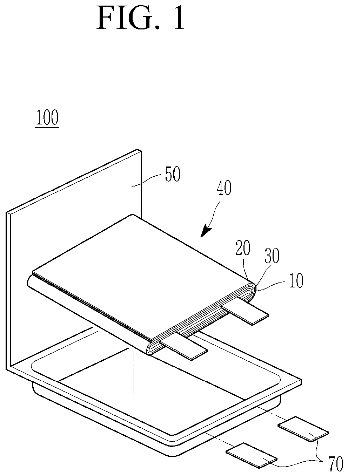

The rechargeable lithium battery may be classified into cylindrical, prismatic, pouch, coin, and/or the like depending on its shape. FIG. 1 is a schematic view showing a rechargeable lithium battery according to some example embodiments. Referring to FIG. 1, the rechargeable lithium battery 100 includes an electrode assembly 40 including a separator 30 interposed between the positive electrode 10 and the negative electrode 20, and a case 50 in which the electrode assembly 40 is housed. The positive electrode 10, the negative electrode 20, and the separator 30 may be impregnated with an electrolyte. The rechargeable lithium battery 100 may further include an electrode tab 70 that serves as an electrical path for guiding the current generated in the electrode assembly 40 to the outside as shown in FIG. 1.

Hereinafter, examples and comparative examples of the present invention will be described. The following present invention is not limited to the following examples.

### EXAMPLES

### Example 1

### (1) Preparation of electrolyte

Mixed electrolytes were prepared as shown in Table 1.

**Table 1**

| | Lithium salt (M) | Non-aqueous organic solvent (vol%) | | | | | Additive (wt%) |
|---|---|---|---|---|---|---|---|
| | LiPF₆ | EC | PC | PP | DETMSA | DMTMSA | |
| Comp. Ex. 1 | 1.3 | 10 | 15 | 75 | - | - | FEC 7%, VEC 1%, LiBF₄ 0.2%, PS 3%, SN 2%, HTCN 3%, LFMB 0.2% |
| Comp. Ex. 2 | 1.3 | 10 | 15 | 65 | 10 | - | |
| Comp. Ex. 3 | 1.3 | 10 | 15 | 55 | 20 | - | |
| Comp. Ex. 4 | 1.3 | 10 | 15 | 25 | - | 50 | |
| Ex. 1 | 1.3 | 10 | 15 | 65 | - | 10 | |
| Ex. 2 | 1.3 | 10 | 15 | 60 | | 15 | |
| Ex. 3 | 1.3 | 10 | 15 | 55 | - | 20 | |
| Ex. 4 | 1.3 | 10 | 15 | 50 | - | 25 | |
| Ex. 5 | 1.3 | 10 | 15 | 45 | - | 30 | |

In Table 1, in the composition of the electrolyte, the content "M" of the lithium salt represents an amount (mol) of the lithium salt in a volume (L) of the entire electrolyte (lithium salt+non-aqueous organic solvent+additive). The content "vol%" of the non-aqueous organic solvent is based on 100% by volume of the total non-aqueous organic solvent. The content "wt%" of the above additive is based on 100 wt% of the total electrolyte (i.e., lithium salt+non-aqueous organic solvent+additive).

### (2) Manufacturing of rechargeable lithium battery cells

LiCoO₂ as a positive electrode active material, polyvinylidene fluoride as a binder, and Ketjen black as a conductive material were mixed respectively in a weight ratio of 98.5:0.75:0.75, and then, dispersed in N-methyl pyrrolidone to prepare a positive electrode active material slurry.

The positive electrode active material slurry was coated on a 14 µm-thick Al foil, dried at 110 °C, and pressed to manufacture a positive electrode.

Artificial graphite and a Si-C composite in a weight ratio of 93:7 was prepared as a negative electrode active material. The negative electrode active material, a styrene-butadiene rubber binder, and carboxylmethyl cellulose in a weight ratio of 97:1:2 were dispersed in distilled water to prepare a negative electrode active material slurry.

The negative electrode active material slurry was coated on a 10 µm-thick Cu foil, dried at 100 °C, and pressed to manufacture a negative electrode.

An electrode assembly was manufactured by assembling the manufactured positive electrode and negative electrode and a 25 µm-thick polyethylene separator, the electrode assembly was positioned (e.g., accommodated) in a pouch, and a 2032 coin-type or kind rechargeable lithium battery cell was manufactured by injecting the electrolyte of the Example 1 (e.g., into the cell).

### Evaluation Example 1: Capacity retention rate of rechargeable lithium battery cell

After performing a formation step for the rechargeable lithium battery cells of Examples 1 to 5 (Ex. 1 to Ex. 5) and Comparative Examples 1 to 4 (Comp. Ex. 1 to Comp. Ex. 4), constant current charging was performed at 25 °C at a current of 1.5 C rate until the voltage reached 4.53 V (vs. Li), and then in constant voltage mode, was cut off at a current of 0.075 C rate while maintaining 4.53 V. Subsequently, the cells were discharged at a constant current of a 0.75 C rate to a voltage of 3.0 V (vs. Li). This charge/discharge cycle was repeated 200 times.

In all the charge and discharge cycles, a pause of 10 minutes was set by every charge/discharge cycle.

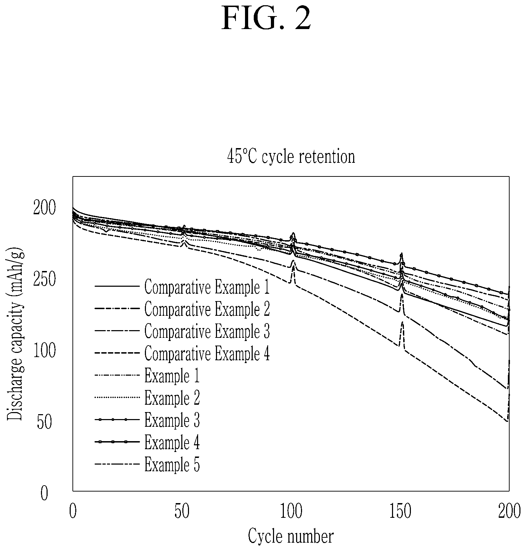

The results of the charge and discharge experiments are shown in Table 2 and FIG. 2. The capacity retention rate in the n^{th} cycle is defined by Equation 1. Capacity retention rate = [Discharge capacity at nth cycle / Discharge capacity at 1st cycle] X 100

**Table 2**

| | Comparative Examples | | | | Examples | | | | |
|---|---|---|---|---|---|---|---|---|---|
| | 1 | 2 | 3 | 4 | 1 | 2 | 3 | 4 | 5 |
| 50^{th} cycle (%) | 93.5 | 94.3 | 91.0 | 91.6 | 94.6 | 92.5 | 93.8 | 95.0 | 94.7 |
| 100^{th} cycle (%) | 84.3 | 89.2 | 82.2 | 78.0 | 88.9 | 87.0 | 87.9 | 90.4 | 88.5 |
| 200^{th} cycle (%) | 58.3 | 57.8 | 37.1 | 26.5 | 66.1 | 63.0 | 62.7 | 71.2 | 68.9 |

According to Table 2, as the charge and discharge cycle of the rechargeable lithium battery cells continues, the cycle-life of Comparative Examples 1 to 4 decreases (e.g., rapidly) compared to Examples 1 to 5.

The results shown in Table 2 indicate that the non-aqueous organic solvent represented by Chemical Formula 1 (in particular DMTMSA) has a greater (e.g., higher) electrochemical stability than not only carbonate-based non-aqueous organic solvents but also N,N-diethyltrifluoromethanesulfonamide (DETMSA). For example, the non-aqueous organic solvent represented by Chemical Formula 1 may reduce side reactions even if the charge and discharge cycle of the rechargeable lithium battery cells are repeated (e.g., 200 or more times).

### Evaluation Example 2: Confirmation of lithium salt decomposition products after high-temperature cycle-life of rechargeable lithium battery cell

After the high-temperature cycle-life of the rechargeable lithium battery cell, the positive electrode was disassembled and analyzed by X-ray photoelectron spectroscopy (XPS), and it was confirmed whether the decomposition products of the lithium salt in the electrolyte were attached to the surface of the negative electrode.

Representatively, Comparative Examples 1 to 3 and Examples 1 and 3 were checked, and the results are shown in Table 3.

**Table 3**

| (unit: wt%) | | | | | |
|---|---|---|---|---|---|
| | Comparative Examples | | | Examples | |
| | 1 | 2 | 3 | 1 | 3 |
| C | 12.6 | 15.6 | 22.6 | 8.4 | 12.8 |
| O | 51.9 | 51.9 | 50.3 | 61.3 | 57.4 |
| F | 34.0 | 30.1 | 23.4 | 29.4 | 28.3 |
| P | 1.5 | 2.4 | 3.7 | 0.8 | 1.6 |

According to Table 3, compared to Comparative Examples 1 to 3, the detected amounts of F and P, which are decomposition products of lithium salt (LiPF₆), were reduced (e.g., small) in Examples 1 and 3.

From these results, it may be confirmed that the non-aqueous organic solvent represented by Chemical Formula 1 (in particular DMTMSA) reduces side reactions on the surface of the positive electrode better than not only carbonate-based non-aqueous organic solvents but also N,N-diethyltrifluoromethanesulfonamide (DETMSA).

### Description of symbols

100: rechargeable lithium battery
10: positive electrode
20: negative electrode
30: separator
40: electrode assembly
50: case
70: electrode tab

## Claims

1. An electrolyte for a rechargeable lithium battery (100), the electrolyte comprising
a non-aqueous organic solvent and a lithium salt,
wherein the non-aqueous organic solvent comprises 10 vol% to 30 vol% of a non-aqueous organic solvent represented by Chemical Formula 1, based on a total amount of the non-aqueous organic solvent: 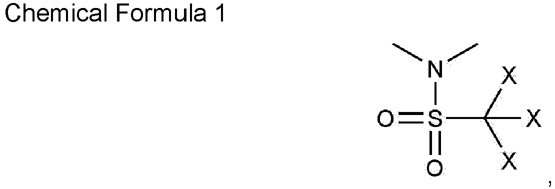 and
wherein, in Chemical Formula 1,
each X is the same or different and is independently a hydrogen atom or a fluorine atom.

2. The electrolyte as claimed in claim 1, wherein
the non-aqueous organic solvent comprises 10 vol% to 20 vol% of the non-aqueous organic solvent represented by Chemical Formula 1, based on the total amount of the non-aqueous organic solvent.

3. The electrolyte as claimed in claim 1 or 2, wherein
in Chemical Formula 1, all X are fluorine atoms.

4. The electrolyte as claimed in any one of the preceding claims, wherein
the non-aqueous organic solvent further comprises a carbonate-based non-aqueous organic solvent, an ester-based non-aqueous organic solvent, or a combination thereof.

5. The electrolyte as claimed in claim 4, wherein
the carbonate-based non-aqueous organic solvent comprises at least one selected from among a cyclic carbonate-based non-aqueous organic solvent and a chain carbonate-based non-aqueous organic solvent; and
wherein the cyclic carbonate-based non-aqueous organic solvent comprises ethylene carbonate (EC), propylene carbonate (PC), butylene carbonate (BC), or a combination thereof; and
the chain carbonate-based non-aqueous organic solvent comprises dimethyl carbonate (DMC), diethyl carbonate (DEC), dipropyl carbonate (DPC), methylpropyl carbonate (MPC), ethylpropyl carbonate (EPC), methylethyl carbonate (MEC), or a combination thereof.

6. The electrolyte as claimed in claim 5, wherein
the carbonate-based non-aqueous organic solvent comprises ethylene carbonate (EC) and propylene carbonate (PC).

7. The electrolyte as claimed in claim 4, wherein
the ester-based non-aqueous organic solvent comprises methyl acetate, ethyl acetate, n-propyl acetate, dimethylacetate, methylpropionate, ethylpropionate, propylpropionate (PP), decanolide, mevalonolactone, valerolactone, caprolactone, or a combination thereof.

8. The electrolyte as claimed in claim 7, wherein
the ester-based non-aqueous organic solvent comprises propylpropionate (PP).

9. The electrolyte as claimed in claim 4, wherein
the non-aqueous organic solvent comprises the carbonate-based non-aqueous organic solvent and the ester-based non-aqueous organic solvent in a volume ratio of 1:2 to 1:3.

10. The electrolyte as claimed in any one of the preceding claims, wherein
the lithium salt comprises at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide (LiFSI), LiC₄F₉SO₃, LiN(CₓF₂ₓ₊₁SO₂)(C_{y}F_{2y+1}SO₂) (x and y are integers from 1 to 20), lithium trifluoromethane sulfonate, lithium tetrafluoroethanesulfonate, lithium difluorobis(oxalato)phosphate (LiDFOB), and lithium bis(oxalato)borate (LiBOB).

11. The electrolyte as claimed in any one of the preceding claims, wherein
the electrolyte further comprises a carbonate-based additive, a sultone-based additive, a nitrile-based additive, a lithium salt-based additive, or a combination thereof.

12. A rechargeable lithium battery (100), comprising
a positive electrode (10) comprising a positive electrode active material;
a negative electrode (20) comprising a negative electrode active material; and the electrolyte as claimed in any one of the preceding claims.

13. The rechargeable lithium battery as claimed in claim 12, wherein
the rechargeable lithium battery has a charging voltage of greater than or equal to 4.45 V.

14. The rechargeable lithium battery as claimed in claim 12, wherein
the positive electrode active material comprises a lithium cobalt oxide.

15. The rechargeable lithium battery as claimed in claim 12, wherein the negative electrode active material comprises graphite.
